(19) **Europäisches Patentamt / European Patent Office / Office européen des brevets**

(11) **EP 3 779 629 B1**

(12) # EUROPEAN PATENT SPECIFICATION

(45) Date of publication and mention
of the grant of the patent:
**12.10.2022 Bulletin 2022/41**

(21) Application number: **18911380.6**

(22) Date of filing: **30.03.2018**

(51) International Patent Classification (IPC):
**G05D 1/02** *(2020.01)*

(52) Cooperative Patent Classification (CPC):
**G05D 1/0272; A01D 34/008; G05D 1/02;
G05D 1/0223; G05D 1/0265;** G05D 2201/0208

(86) International application number:
**PCT/JP2018/013912**

(87) International publication number:
**WO 2019/187122 (03.10.2019 Gazette 2019/40)**

(54) **AUTONOMOUS RUNNING WORKING MACHINE AND CONTROL SYSTEM**

AUTONOM LAUFENDE ARBEITSMASCHINE UND STEUERUNGSSYSTEM

MACHINE DE TRAVAIL À DÉPLACEMENT AUTONOME ET SYSTÈME DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.02.2021 Bulletin 2021/07**

(73) Proprietor: **HONDA MOTOR CO., LTD.**
**Minato-ku
Tokyo 107-8556 (JP)**

(72) Inventors:
• **KAMEYAMA Naoki
Wako-shi, Saitama 351-0193 (JP)**
• **MURO Keiji
Wako-shi, Saitama 351-0193 (JP)**
• **SHIMAMURA Hideaki
Wako-shi, Saitama 351-0193 (JP)**

• **KANEKO Runa
Wako-shi, Saitama 351-0193 (JP)**

(74) Representative: **Feller, Frank
Weickmann & Weickmann
Patent- und Rechtsanwälte PartmbB
Postfach 860 820
81635 München (DE)**

(56) References cited:
| | |
|---|---|
| CN-A- 107 348 910 | CN-A- 107 443 430 |
| JP-A- H04 221 281 | JP-A- H05 108 151 |
| JP-A- 2003 303 021 | JP-A- 2006 004 412 |
| JP-A- 2007 323 119 | JP-A- 2017 010 161 |
| JP-A- 2017 531 423 | US-A1- 2008 188 984 |
| US-A1- 2009 055 020 | US-A1- 2017 188 510 |
| US-A1- 2017 315 560 | |

**Description**

Technical Field

The present invention relates to an autonomous running working machine and a control system.

Background Art

As one of autonomous running working machines that work while autonomously running, robot lawn mowers that independently run in lawn areas and mow lawns (also called "autonomous lawn mowers" or "unmanned lawn mowers") are known (see, for example, Japanese Patent No. 5529947, U.S. Patent Application Publication No. 2016/0302354 and U.S. Patent Application Publication No. 2014/0032033).
In addition, the robot lawn mower generally stores area data on a lawn mowing area that is a work target area for a lawn mowing work, and a running path of the robot lawn mower during lawn mowing has been determined based on this area data. Further, during the lawn mowing work, the robot lawn mower autonomously runs according to a predetermined running path while estimating its own position by an odometry (self-position estimation) function.
CN 107 348 910 A and CN 107 443 430 A relate to detecting objects that robots may collide with, and disclose determining whether the robot collides with an object based on the error rate due to changes in angular velocity due to slip. CN 107 348 910 A discloses storing control information including error rate due to sip and position information in the storage unit, and controlling a robot based on the information stored in the storage unit. US 2009/055020 A1 discloses storing slip data and controlling a running of a robot based on the position error due to the slip.
JP 2007-323119 A discloses an autonomous running working machine according to the preamble of claim 1.

Summary of Invention

Technical Problem

Now, if the robot lawn mower slips while autonomously running, the robot lawn mower may deviate from the defined running path due to an error generated in the odometry value and the slip may cause a lawn removal.
Conventionally, a technique has thus been proposed in which a robot lawn mower monitors generation of a slip during autonomous running, and reduces the running speed when a certain degree slip is detected, to prevent generation of a slip equal to or larger than it.
However, in the conventional technique, since the autonomous running is controlled only after a large slip is detected, it is difficult to avoid the slip generation itself.
Further, this problem is not limited to robot lawn mowers, but is a problem common to autonomous running working machines that perform a work while autonomously running.
An object of the present invention is to provide an autonomous running working machine and a control system capable of reducing generation of slip during autonomous running.

Solution to Problem

The present invention provides an autonomous running working machine according to claim 1.
The autonomous running working machine includes: a positional information acquisition unit for acquiring positional information; a slip rate acquisition unit for acquiring a slip rate indicating a degree of a slip; a storing unit for storing control information, the positional information acquired by the positional information acquisition unit being associated with the slip rate acquired by the slip rate acquisition unit in the control information; and a running control unit for controlling the autonomous running based on the control information stored in the storing unit.
The autonomous running working machine also includes a running path setting unit for setting information defining a running path, wherein the running control unit controls the autonomous running based on the control information and the running path defined by the information set by the running path setting unit.
The running path includes a work path at a time of performing the predetermined work, and the running control unit executes deceleration according to the slip rate while executing autonomous running along the work path.
The autonomous running working machine also includes a speed information acquisition unit for acquiring a running speed, and a slip generation speed acquisition unit for acquiring a running speed when a slip rate indicating a first-degree slip is acquired, wherein the running control unit executes deceleration to a speed lower than the running speed acquired by the slip generation speed acquisition unit in a case of entering a point with the slip rate indicating the first-degree slip.
Further, at a time of passing a point with the slip rate indicating the first-degree slip, the storing unit stores a running speed at which the slip degree generated at the point is decreased, and, in a case of entering the point with the slip rate indicating the first-degree slip, the running control unit executes deceleration at least to the running speed stored in the storing unit.

Preferably, in a case where a turning point included in a work path defined by information set by the running path setting unit is at a position with the slip rate indicating generation of the first-degree slip, the running control unit executes autonomous running on a work path where the turning point is deviated from the position.

Preferably, the running control unit executes the autonomous running such that a frequency of passing a point with a slip rate indicating generation of slip equal to or smaller than a second degree is higher than a frequency of passing a point with the slip rate indicating generation of the first-degree slip.

Preferably, the running path includes a work path at a time of performing the predetermined work, and in a case where a work path defined by information set by the running path setting unit includes a point with the slip rate indicating generation of the first-degree slip, the running control unit sets a path avoiding the point as the work path.

Preferably, in a case where a return path for returning to a predetermined position includes a point with a slip rate indicating generation of a first-degree slip, the running control unit executes return by autonomous running on a path that does not include the point.

Yet another aspect of the present invention is a control system for the autonomous running working machine of the invention that executes a predetermined work while autonomously running, wherein the control system includes: a positional information acquisition unit for acquiring positional information of the autonomous running working machine; a slip rate acquisition unit for acquiring a slip rate indicating a slip degree of the autonomous running working machine; a storing unit for storing control information, the positional information acquired by the positional information acquisition unit being associated with the slip rate acquired by the slip rate acquisition unit in the control information; and a running control unit for controlling autonomous running of the autonomous running working machine based on the control information stored in the storing unit.

Advantageous Effect of Invention

According to the aspects of the present invention, the generation of slip during autonomous running can be reduced.

Brief Description of Drawings

Figure 1 is a diagram showing a configuration of an unmanned lawn mowing system according to an embodiment of the present invention.
Figure 2 is a diagram schematically showing a configuration of a robot lawn mower.
Figure 3 is a block diagram showing a functional configuration of a control unit.
Figure 4 is a schematic diagram of slip rate distribution data.
Figure 5 is an explanatory diagram of a random pattern.
Figure 6 is an explanatory diagram of a zigzag pattern.
Figure 7 is a flowchart showing a main operation of a robot lawn mower.
Figure 8 is a flowchart of slip reduction control in lawn mowing running.
Figure 9 is an operation explanatory diagram of the slip reduction control in the lawn mowing running.
Figure 10 is a flowchart of the slip reduction control during return running.
Figure 11 is an operation explanatory diagram of the slip reduction control during the return running.

Description of Embodiments

Embodiments of the present invention are described below with reference to the drawings.

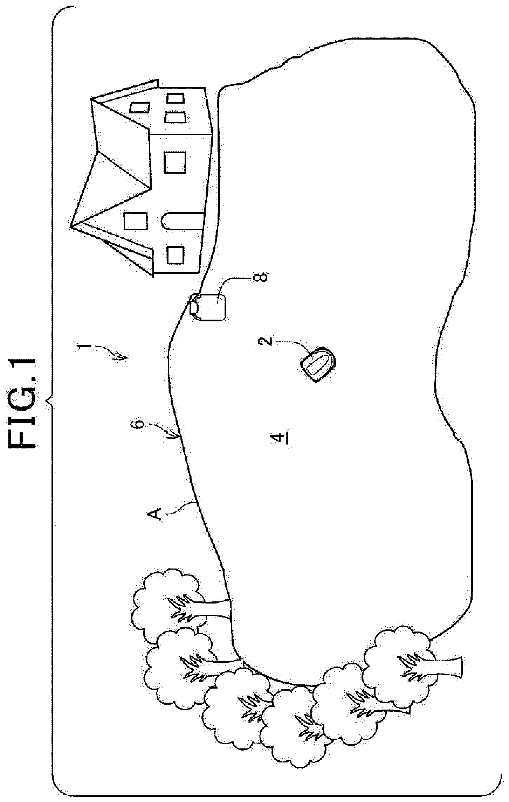

Figure 1 is a diagram showing a configuration of an unmanned lawn mowing system 1 according to this embodiment.

The unmanned lawn mowing system 1 includes a robot lawn mower 2, an area wire 6 that demarcates a lawn mowing area 4 for a lawn mowing work, and a station 8.

The robot lawn mower 2 is an autonomous running type working machine that mows turfgrass while autonomously running in the lawn mowing area 4 in unmanned operation.

The area wire 6 is a member laid along a boundary A by a dealer or the like so that the robot lawn mower 2 can detect the boundary A of the lawn mowing area 4. In this embodiment, the laid area wire 6 is magnetic, and the robot lawn mower 2 detects the magnetism of the area wire 6 to detect the boundary A of the lawn mowing area 4.

The station 8 has a charging device 8A that charges the robot lawn mower 2 and is installed in the lawn mowing area 4. This station 8 is also a standby place for the robot lawn mower 2 when it is not in work. At the end of the lawn mowing work, the robot lawn mower 2 returns to the station 8 by autonomous running and is appropriately charged at the station 8.

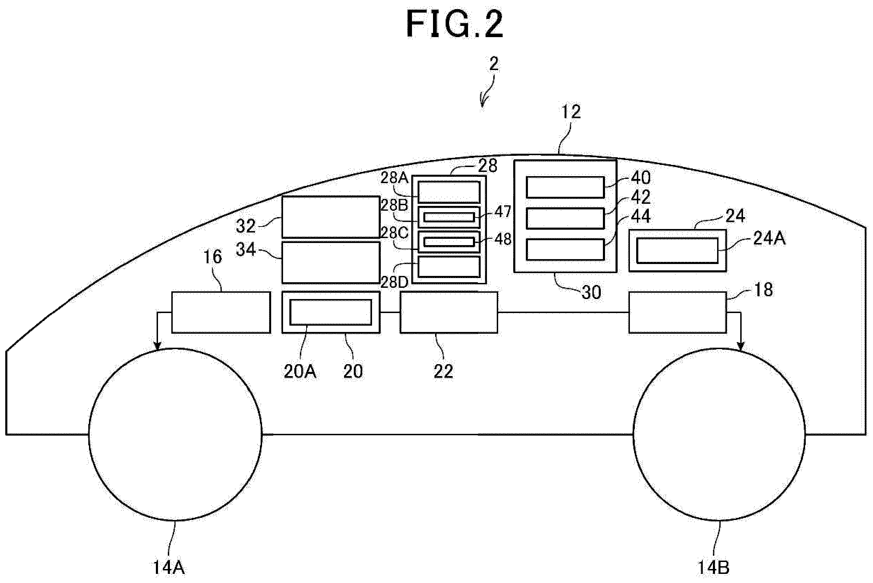

Figure 2 is a diagram schematically showing a configuration of the robot lawn mower 2.

The robot lawn mower 2 has a box-shaped main body 12, and the main body 12 has steerable front wheels 14A provided on the left and right in the front, and rear wheels 14B, which are drive wheels, provided on the left and right in the rear. Further, the main body 12 includes a steering mechanism 16, a drive mechanism 18, a lawn mowing mechanism 20, a motor 22, a battery unit 24, a sensor unit 28, a control unit 30, an operation unit 32, and display unit 34.

The control unit 30 is a device that controls each unit provided in the main body 12 and realizes a function of independently executing lawn mowing work and autonomous running together. The control unit 30 has a computer including a processor 40 such as CPU and MPU, a memory device 42 such as ROM and RAM, and a storage device 44 such as HDD and SSD, and the processor 40 executes a computer program stored in the memory device 42, the storage device 44, or the like to realizes various functions. The functional configuration of the control unit 30 is described below. The control unit 30 may include a plurality of computers, and the respective computers may cooperate to realize various functions.

The operation unit 32 includes various operators (buttons, ten-keys, touch panel...) to accept user operations, and outputs the operations to the control unit 30. The display unit 34 includes a display panel or the like and displays various information.

The steering mechanism 16 is a mechanism that steers the front wheels 14A, and includes a steering motor and a gear transmission mechanism that moves the front wheels 14A in the left and right directions by rotation of the steering motor. The drive mechanism 18 is a mechanism that drives the rear wheels 14B, and includes a power transmission mechanism that transmits the power of the motor 22 to the rear wheels 14B for driving. The lawn mowing mechanism 20 is a working unit for performing lawn mowing, and includes a cutting blade 20A for lawn mowing and a connecting mechanism that connects the cutting blade 20A to a motor 22 in an interlocking manner. The battery unit 24 includes a battery 24A and supplies the electric power of the battery 24A to each unit such as the motor 22.

The sensor unit 28 includes various sensors necessary for autonomously running in the lawn mowing area 4 and avoiding obstacles (houses, trees, or the like) at the same time. In this embodiment, the sensor unit 28 includes at least an area detection sensor unit 28A, an odometry detection sensor unit 28B, a slip rate detection sensor unit 28C, and a speed detection sensor unit 28D.

The area detection sensor unit 28A includes various detection devices for detecting the boundary A of the lawn mowing area 4, and, in this embodiment, includes a magnetic sensor for detecting the magnetism of the area wire 6.

The odometry detection sensor unit 28B includes various detection devices for detecting the current position of the robot lawn mower 2, and, in this embodiment, includes a drive wheel vehicle speed sensor 47 for detecting each of the vehicle speeds of the left and right rear wheels 14B (hereinafter referred to as "drive wheel vehicle speeds") which are the drive wheels. During autonomous running, the control unit 30 determines the moving distance of the robot lawn mower 2 based on the integral value of the drive wheel vehicle speed, and also determines the turning direction based on the difference between the drive wheel vehicle speeds of the left and right rear wheels 14B. Then, the control unit 30 sequentially identifies the relative position of the robot lawn mower 2 with respect to a base point (the station 8 in this embodiment) where the robot lawn mower 2 has started running, based on the moving distance and turning direction. In addition, the odometry detection sensor unit 28B may include an acceleration sensor or a gyro sensor, and the control unit 30 may correct the current position based on the drive wheel vehicle speed, using the detection values of these sensors, to improve the detection accuracy of the current position. The odometry detection sensor unit 28B may also include a GPS receiver that receives a GPS (Global Positioning System) signal, and the control unit 30 may detect the current position based on the GPS signal.

The slip rate detection sensor unit 28C includes various detection devices for detecting a slip rate $\lambda$. The slip rate $\lambda$ is a value that quantifies the degree of the slip generated when the robot lawn mower 2 runs, and in this embodiment, the slip rate $\lambda$ is defined by the following equation.

$$\text{Slip rate } \lambda = (\text{driven wheel vehicle speed} - \text{drive wheel vehicle speed})/\text{drive wheel vehicle speed}$$

The driven wheel vehicle speed is the vehicle speed of the front wheel 14A that is a driven wheel. According to this definition, the value of the slip rate $\lambda$ increases and approaches "1" as a large slip is generated.

The slip rate detection sensor unit 28C includes a driven wheel vehicle speed sensor 48 for detecting the driven wheel vehicle speed, and shares the drive wheel vehicle speed sensor 47, which the odometry detection sensor unit 28B includes therein, as a detection device for detecting the vehicle speed of the drive wheels. Then, the control unit 30 sequentially calculates the slip rate $\lambda$ based on the detection values of the drive wheel vehicle speed sensor 47 and the driven wheel vehicle speed sensor 48 during running.

Note that the slip rate $\lambda$ is not limited to the above equation, and may be determined by the following equation, for example.

$$\text{Slip rate } \lambda = (\text{vehicle body speed-wheel vehicle speed})/\text{vehicle body speed}$$

Further, any other quantification method can be used for the slip rate $\lambda$. In this case, the slip rate detection sensor unit 28C is provided with a detection device necessary for detecting the physical quantity used in the quantification method.

The speed detection sensor unit 28D includes various detection devices for detecting a running speed V of the robot lawn mower 2. In this embodiment, the running speed V is determined based on the drive wheel vehicle speed. Therefore, in this embodiment, the speed detection sensor unit 28D shares the drive wheel vehicle speed sensor 47, which the odometry detection sensor unit 28B includes therein, as a detection device for detecting the running speed. Note that the running speed may be determined based on the driven wheel vehicle speed, or may be determined based on a detection signal of any other speed sensor.

The sensor unit 28 is not limited to the above detection device, and may be appropriately provided with any detection device as required, such as a detection device for detecting obstacles (for example, a contact detection sensor).

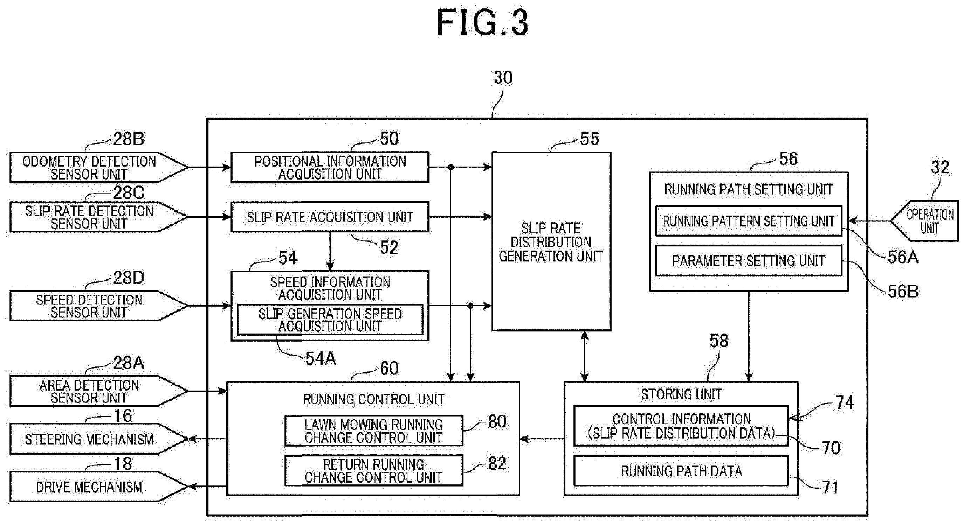

Figure 3 is a block diagram showing a functional configuration of the control unit 30.

As shown in the figure, the control unit 30 includes a positional information acquisition unit 50, a slip rate acquisition unit 52, a speed information acquisition unit 54, a slip rate distribution generation unit 55, a running path setting unit 56, a storing unit 58, and a running control unit 60. These functional units are realized by the processor 40 executing computer programs.

The positional information acquisition unit 50 sequentially acquires positional information P based on the detection signal of the detection device which the odometry detection sensor unit 28B includes therein while the robot lawn mower 2 is autonomously running. In this embodiment, the positional information P is information indicating a relative position with respect to the station 8 as described above.

The slip rate acquisition unit 52 sequentially acquires a slip rate $\lambda$ based on a detection signal of the detection device which the slip rate detection sensor unit 28C includes therein, while the robot lawn mower 2 is autonomously running.

The speed information acquisition unit 54 sequentially acquires a running speed V based on the detection signal of the detection device which the speed detection sensor unit 28D includes therein, while the robot lawn mower 2 is autonomously running. Further, in this embodiment, the speed information acquisition unit 54 includes a slip generation speed acquisition unit 54A. The slip generation speed acquisition unit 54A acquires the running speed at the time when the slip having a first degree or more is generated (hereinafter, referred to as "slip generation running speed $V\lambda$"). The first-degree slip refers to a slip that causes an error, to the extent that return by autonomous running to the station 8 is impossible, in the positional information P acquired by the positional information acquisition unit 50, or a slip that causes a lawn removal. A value indicating the first-degree slip is set in advance as a first predetermined value $\lambda$th1 of the slip rate $\lambda$. Here, in the following description, a point where the slip rate $\lambda$ is equal to or larger than the first predetermined value $\lambda$th1 is referred to as a "high slip point Pk".

The slip rate distribution generation unit 55 generates slip rate distribution data 70 indicating the distribution of the slip rate $\lambda$ in the lawn mowing area 4.

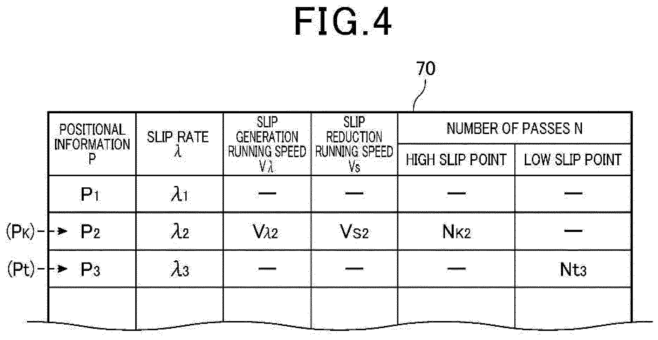

Figure 4 is a schematic diagram of the slip rate distribution data 70.

As shown in the figure, in the slip rate distribution data 70, positional information P and slip rate $\lambda$ are recorded in association with each other. Further, in the slip rate distribution data 70, the slip generation running speed $V\lambda$ at the high slip point Pk and the number of passes N that the high slip point Pk has been passed during lawn mowing work are recorded in association with each other.

This slip rate distribution data 70 consolidates the slip rate $\lambda$ at each point in the lawn mowing area 4, the slip generation running speed $V\lambda$ when a slip is actually generated at the high slip point Pk, and the number of passes N that the high slip point Pk has been passed.

Further, in the slip rate distribution data 70, the number of passes N that a low slip point Pt has been passed during lawn mowing work is also recorded in association with the positional information P. The low slip point Pt is a point where the slip rate $\lambda$ is a second predetermined value $\lambda$th2 or less. As the second predetermined value $\lambda$th2, a slip rate $\lambda$ is set, in which the slip is in a degree that gives little error to the positional information P acquired by the positional information acquisition unit 50 and does not cause lawn removal.

The slip rate distribution data 70 enables comparing the number of passes N at each of the high slip points Pk and the low slip points Pt to determine whether the running path is biased to the low slip point Pt.

Further, the first predetermined value λth1 is set as the second predetermined value λth2, so that the points other than the high slip point Pk can be considered to be the low slip point Pt.

Here, in this embodiment, when the robot lawn mower 2 passes the high slip point Pk during lawn mowing work, it reduces the running speed V to a speed lower than the slip generation running speed Vλ and passes there to prevent generation of the first-degree slip. In the slip rate distribution data 70, if the slip rate λ is equal to or less than the second predetermined value λth2 when the robot lawn mower 2 passes the high slip point Pk with the running speed V reduced, the running speed V is recorded as the slip reduction running speed Vs. Accordingly, when the robot lawn mower 2 passes the high slip point Pk, it can pass there at the slip reduction running speed Vs to decrease the slip generation.

Returning to Figure 3, while the robot lawn mower 2 is autonomously running, the slip rate distribution generation unit 55 sequentially acquires the positional information P acquired by the positional information acquisition unit 50, the slip rate λ acquired by the slip rate acquisition unit 52, and the slip generation running speed Vλ acquired by the slip generation speed acquisition unit 54A, records them in the slip rate distribution data 70, and stores the slip rate distribution data 70 in the storing unit 58.

When slip rate distribution data 70 have been already stored in the storing unit 58, the slip rate distribution generation unit 55 sequentially updates and records the slip rate distribution data 70 while the robot lawn mower 2 is autonomously running. Specifically, when the slip rate λ and the slip generation running speed Vλ (in a case of that slip rate λ ≥ first predetermined value λth1) for the new positional information P are acquired, the slip rate distribution generation unit 55 adds these to the slip rate distribution data 70. Further, when the slip rate λ or the slip generation running speed Vλ different from the already recorded values are acquired for the existing positional information P, the slip rate distribution generation unit 55 updates the slip rate distribution data 70 with these values. Further, when the robot lawn mower 2 passes the high slip point Pk or the low slip point Pt, the slip rate distribution generation unit 55 updates and records the number of passes N at the high slip point Pk or the low slip point Pt. Further, when the slip reduction running speed Vs is acquired for the existing high slip point Pk, the slip rate distribution generation unit 55 updates and records this.

Such an update and record operation can always keep the slip rate distribution data 70 with the latest information even if, for example, the distribution of the slip rate λ in the lawn mowing area 4 may change due to the presence or absence of rainfall or the replanting of turfgrass.

Further, any other information than the above such as the running speed V may be recorded in the slip rate distribution data 70 in association with the positional information P.

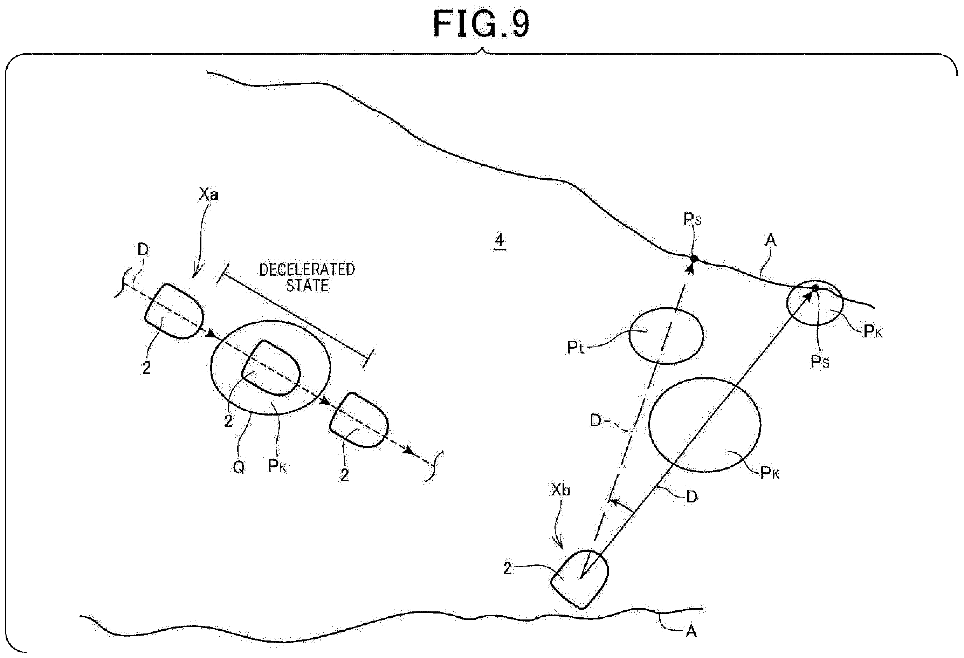

The running path setting unit 56 sets information that defines what trajectory the robot lawn mower 2 draws to autonomously run in the lawn mowing area 4 during lawn mowing work, that is, a work path D during the lawn mowing work (Figure 9).

More specifically, in this embodiment, as patterns of running trajectory (that is, lawn mowing path) that the robot lawn mower 2 draws in lawn mowing area 4 during lawn mowing work, there are three types of patterns (hereinafter referred to as "running patterns"), a "random pattern", a "zigzag pattern", and a "mix pattern", defined in advance.

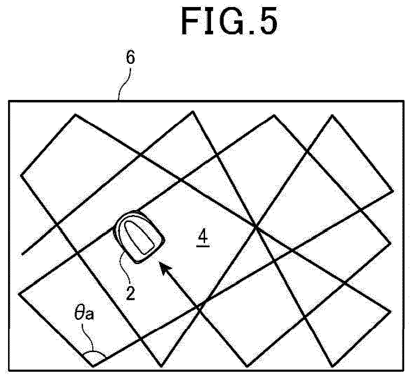

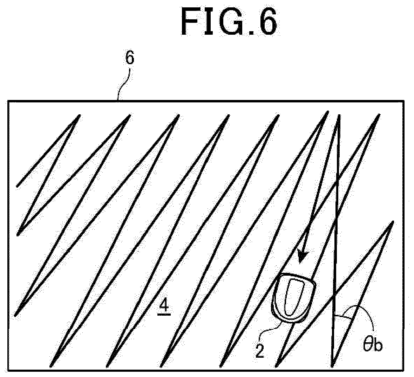

Figure 5 is an explanatory diagram of a random pattern, and Figure 6 is an explanatory diagram of a zigzag pattern.

As shown in Figure 5, the random pattern is a lawn mowing path pattern where the robot lawn mower 2 goes straight until detecting the boundary A (the area wire 6 in this embodiment) of the lawn mowing area 4, and turns at a first turning angle θa, which is relatively large, upon detecting the boundary A to change the direction. This random pattern is suitably used when the robot lawn mower 2 mows over a lawn mowing area 4 which is relatively large.

The zigzag pattern is a pattern in which the first turning angle θa in the random pattern is reduced. That is, the zigzag pattern is a lawn mowing path pattern, as shown in Figure 6, where the robot lawn mower 2 goes straight, until detecting the boundary A of the lawn mowing area 4, and turns at a second turning angle θb smaller than the first turning angle θa upon detecting the boundary A to change the direction. The zigzag pattern is suitably used when the robot lawn mower 2 mows a lawn mowing area 4 which is relatively small.

The mix pattern is a lawn mowing path pattern, where the robot lawn mower 2 repeats a random pattern and a zigzag pattern alternately every fixed time or every fixed mileage during lawn mowing work.

Returning to Figure 3, the running path setting unit 56 includes a running pattern setting unit 56A that selects and sets a lawn mowing path pattern, and a parameter setting unit 56B that sets a turning angle. The running pattern setting unit 56A sets a pattern of the lawn mowing path based on a selection operation of the user, and the parameter setting unit 56B automatically sets a turning angle based on the lawn mowing path pattern, or the size or shape of the lawn mowing area 4, or sets a turning angle based on the user input.

The lawn mowing path pattern and parameters define the lawn mowing path of the robot lawn mower 2 during lawn mowing work. The lawn mowing path pattern and parameters are stored in the storing unit 58 as running path data 71.

The parameter setting unit 56B is not limited to the turning angle, and may set an optional parameter such as the turning direction (clockwise or counterclockwise) at the time of turning.

The storing unit 58 stores control information 74, which is information required for controlling the autonomous running of the robot lawn mower 2 that decreases the slip generation, and the running path data 71. The control information 74 includes at least the slip rate distribution data 70 described above.

The running control unit 60 controls the steering mechanism 16 and the driving of the drive mechanism 18 to control the autonomous running of the robot lawn mower 2. More specifically, the running control unit 60 performs autonomous running control during lawn mowing work (hereinafter referred to as "lawn mowing running control") and autonomous running control during return to station 8 after finishing the lawn mowing work (hereinafter referred to as "return running control"), as autonomous running control.

In the lawn mowing running control, the running control unit 60 controls the robot lawn mower 2 to run along the lawn mowing path defined by the running path data 71. That is, the running control unit 60 causes the robot lawn mower 2 to go straight until the area detection sensor unit 28A detects the boundary A of the lawn mowing area 4, and to turn the robot lawn mower 2 at the first turning angle $\theta a$ or the second turning angle $\theta b$ when the boundary A is detected.

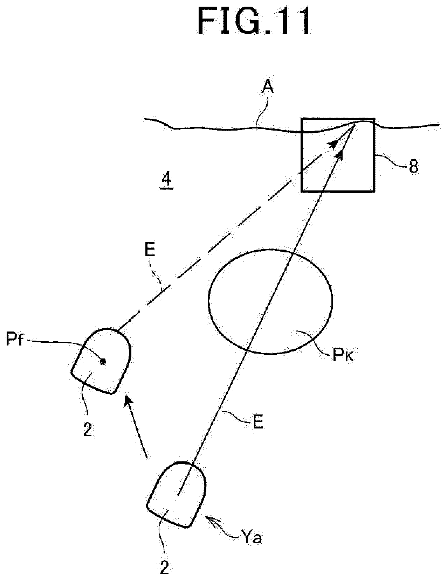

In the return running control, the running control unit 60 identifies the return path E (Figure 11) that linearly connects the positional information acquired by the positional information acquisition unit 50 (information on the position relative to the station 8) with the station 8. Then, the running control unit 60 causes the robot lawn mower 2 to turn toward the station 8, and subsequently to go straight along the return path E to return to the station 8.

Furthermore, the running control unit 60 also performs control for decreasing the generation of the above-described first-degree slip (that is, the slip in which the slip rate $\lambda$ is equal to or more than the first predetermined value $\lambda th1$) in each of lawn mowing running control and return running control. For such control, the running control unit 60 includes a lawn mowing running change control unit 80 and a return running change control unit 82.

The lawn mowing running change control unit 80 and the return running change control unit 82 both execute control based on the control information 74 to decrease the generation of the first-degree slip during autonomous running, where the lawn mowing running change control unit 80 decreases the generation of the first-degree slip during running of the lawn mowing work, and the return running change control unit 82 decreases the generation of the first-degree slip during the return running.

More specifically, the lawn mowing running change control unit 80 executes deceleration control, turning point change control, and passing point change control during the lawn mowing running to reduce the generation of the first-degree slip.

The deceleration control is control for reducing the running speed V to at least a speed slower than the slip generation running speed $V\lambda$, when the robot lawn mower 2 passes the high slip point Pk. That is, during lawn mowing running, the lawn mowing running change control unit 80 sequentially determines whether the point to pass from now on is a high slip points Pk in the slip rate distribution data 70, based on the positional information P acquired by the positional information acquisition unit 50, and the slip rate distribution data 70. Then, when the point is a high slip point Pk, the lawn mowing running change control unit 80 executes control where it reduces the running speed V to a speed slower than the slip generation running speed $V\lambda$, while passing the high slip point Pk. As a result, the generation of the first-degree slip due to pass of the high slip point Pk is reduced.

Further, when the slip rate $\lambda$ acquired at a time of passing the high slip point Pk is equal to or less than the second predetermined value $\lambda th2$ (that is, the slip is equal to or less than a second degree), the running speed V at this time is recorded as the slip reduction running speed Vs in the slip rate distribution data 70 by the slip rate distribution generation unit 55. Then, the lawn mowing running change control unit 80 reduces the running speed V to the slip reduction running speed Vs to pass the high slip point Pk next time. In this way, the degree of slip generated at a time of passing the high slip point Pk can be surely decreased to the second degree or less.

In this embodiment, when the slip rate $\lambda$ acquired at a time of passing the high slip point Pk is equal to or larger than the second predetermined value $\lambda th2$ (that is, the slip is equal to or larger than the second degree) and smaller than the first predetermined value $\lambda th1$, the running speed V at this time is memorized in, for example, the slip rate distribution data 70, as a running speed at the last passing, in association with the high slip point Pk. Then, each time when the robot lawn mower 2 passes the high slip point Pk where the slip reduction running speed Vs is not recorded, the robot lawn mower 2 passes there at a running speed V lower than the running speed at the last passing. The robot lawn mower 2 repeatedly performs such speed control every time it passes the high slip point Pk, so that it can surely reduce the running speed V when passing through the high slip point Pk to the slip reduction running speed Vs where the slip rate $\lambda$ is equal to or less than the second predetermined value $\lambda th2$.

The turning point change control is control such that the robot lawn mower 2 avoids turning at the high slip point Pk. This turning point change control is executed when the robot lawn mower 2 is turned at the boundary A of the lawn mowing area 4 at the first turning angle $\theta a$ or the second turning angle $\theta b$ defined in the running path data 71. In turning point change control, the lawn mowing running change control unit 80 identifies the work path D along which the robot lawn mower 2 goes straight after turning, and determines whether the vicinity of the intersection between the work path D and the boundary A of the lawn mowing area 4 corresponds to the high slip point Pk, based on the slip rate distribution data 70. In a case of corresponding to the high slip point Pk, the lawn mowing running change control unit 80 identifies a turning angle at which the intersection of the work path D and the boundary A deviates from the high slip point Pk, and changes the first turning angle θa or the second turning angle θb to that turning angle to turn the robot lawn mower 2. This control can reduce the first-degree slip that may be generated when the robot lawn mower 2 turns at the high slip point Pk.

The passing point change control is a control for reducing the frequency with which the robot lawn mower 2 passes the high slip point Pk. This passing point change control is executed when the robot lawn mower 2 is turned at the boundary A of the lawn mowing area 4 at the first turning angle θa or the second turning angle θb defined in the running path data 71. In passing point change control, the lawn mowing running change control unit 80 identifies the work path D in which the robot lawn mower 2 goes straight after turning, and identifies whether there is the high slip point Pk on the work path D based on the slip rate distribution data 70. When there is a high slip point Pk and the number of passes N at the high slip point Pk exceeds the number of passes N at all other low slip points Pt by the running of the robot lawn mower 2, the lawn mowing running change control unit 80 identifies a turning angle that includes any of the low slip points Pt on the work path D. Then, the lawn mowing running change control unit 80 changes the first turning angle θa or the second turning angle θb to the turning angle to cause the robot lawn mower 2 to turn and then go straight on the running path. As a result, the frequency with which the robot lawn mower 2 passes the low slip point Pt is kept higher than the frequency with which the robot lawn mower 2 passes the high slip point Pk, and the risk of the first-degree slip generation is decreased.

The return running change control unit 82 changes the start position of return running to execute start position change control for changing the return path E such that the robot lawn mower 2 does not pass the high slip point Pk when returning. This start position change control is executed when the robot lawn mower 2 is turned toward the station 8 after the lawn mowing work is finished. In the start position change control, the return running change control unit 82 determines whether there is a high slip point Pk on the return path E that linearly connects the current position and the station 8 based on the slip rate distribution data 70. When there is a high slip point Pk, the return running change control unit 82 identifies a position where the robot lawn mower 2 can go straight to return to the station 8 without passing the high slip point Pk, and moves the robot lawn mower 2 to the position. As a result, the robot lawn mower 2 does not pass the high slip point Pk during the return running, and the generation of the first-degree slip is decreased.

Next, the operation of the robot lawn mower 2 is described below.

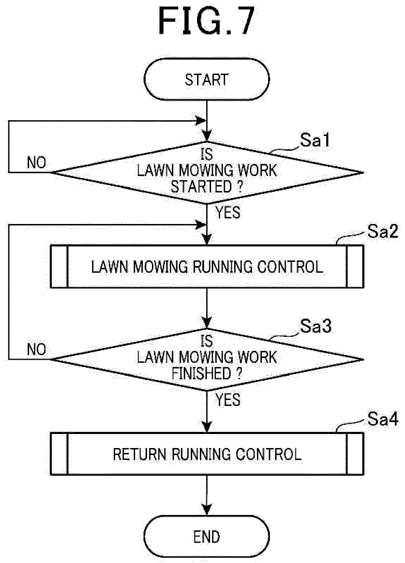

Figure 7 is a flowchart showing the main operation of the robot lawn mower 2.

The robot lawn mower 2 stands by at the station 8 before starting lawn mowing work. Then, the robot lawn mower 2 starts the lawn mowing work based on, for example, a user operation or a timer setting in which the lawn mowing work date and time is designated in advance. When the robot lawn mower 2 starts lawn mowing work (step Sa1), it autonomously runs along the defined work path D based on the running path data 71, while executing lawn mowing running control for driving the lawn mowing mechanism 20 to perform lawn mowing (step Sa2). After that, when the lawn mowing work is completed (step Sa3: YES), the robot lawn mower 2 executes return running control to autonomously run along the return path E toward the station 8 (step Sa4).

In addition, in the determination of step Sa3, the following case can also be determined as a termination condition for the lawn mowing work. It is namely one of the cases where the remaining capacity of the battery 24A decreases to fall below a predetermined threshold, the error in the current position increases to exceed the predetermined threshold, and the current position is incorrect or cannot be determined for the reason such as that the user has lifted the robot lawn mower 2. Then, in step Sa3, if any of these termination conditions is satisfied, the robot lawn mower 2 may return to the station 8 even if the lawn mowing work is not completed.

In the robot lawn mower 2 of this embodiment, as mentioned above, the slip rate distribution generation unit 55 generates the slip rate distribution data 70, and updates and records it during lawn mowing running control (step Sa2). In parallel with this, the lawn mowing running change control unit 80 executes slip reduction control for decreasing the generation of the first-degree slip.

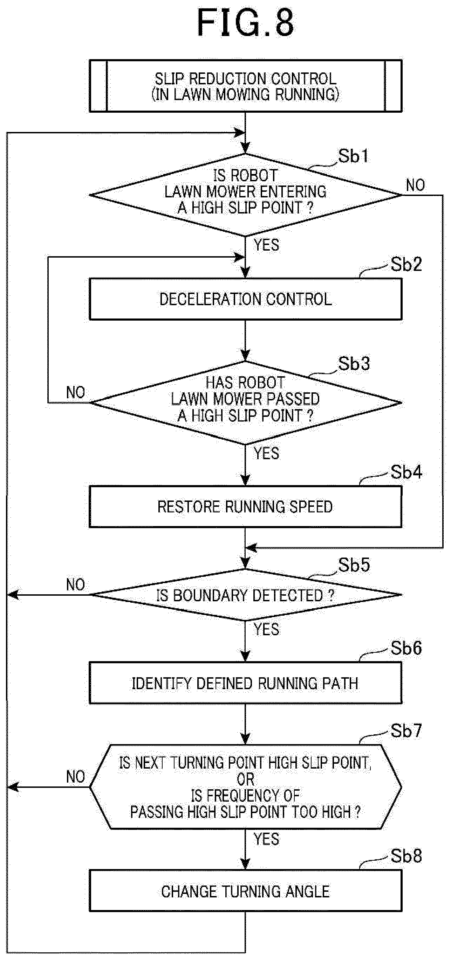

Figure 8 is a flowchart of slip reduction control in lawn mowing running. Figure 9 is an operation explanatory diagram of slip reduction control in lawn mowing running.

In this slip reduction control, the lawn mowing running change control unit 80 executes the above-described deceleration control, turning point change control, and passing point change control.

That is, as shown in Figure 8, the lawn mowing running change control unit 80 determines whether the robot lawn mower 2 is entering a high slip point Pk (that is, whether it is immediately before the high slip point Pk) (step Sb1). The determination in step Sb1 is performed based on the positional information of the robot lawn mower 2 and the slip rate distribution data 70. Specifically, the lawn mowing running change control unit 80 identifies the high slip point Pk on the work path D where the robot lawn mower 2 is going straight based on the slip rate distribution data 70, and determines whether the robot lawn mower 2 has approached a position at a predetermined distance from the high slip point Pk. Then, when the robot lawn mower 2 reaches a position at a predetermined distance to the high slip point Pk, the lawn mowing running change control unit 80 determines that the robot lawn mower 2 enters the high slip point Pk. Here, the predetermined distance is a value to be set appropriately.

When the robot lawn mower 2 enters the high slip point Pk (step Sb1: YES), the lawn mowing running change control unit 80 executes deceleration control to make the running speed V slower than at least the slip generation running speed $V\lambda$ (step Sb2), and when the robot lawn mower 2 finishes passing the high slip point Pk (step Sb3: YES), the lawn mowing running change control unit 80 restores the running speed V (step Sb4). Further, in step Sb2, when the slip reduction running speed Vs has been recorded in the slip rate distribution data 70, the lawn mowing running change control unit 80 reduces speed to the slip reduction running speed Vs.

As a result, when the robot lawn mower 2 indicated by the arrow Xa in Figure 9 runs along the work path D, it decelerates before entering an area Q of high slip point Pk, keeps decelerating while crossing the area Q, and restores the running speed V after exiting the area Q. Thus, the robot lawn mower 2 passes the high slip point Pk in a decelerated state, so that the generation of the first-degree slip is decreased at the high slip point Pk.

Returning to Figure 8, the robot lawn mower 2 repeatedly executes the process of steps Sb1 to Sb4 until the boundary A of the lawn mowing area 4 is detected. After that, when the boundary A is detected (step Sb5: YES), the lawn mowing running change control unit 80 executes the turning point change control and the passing point change control.

Specifically, the lawn mowing running change control unit 80 first identifies the work path D drawn when the robot lawn mower 2 turns at the defined first turning angle θa or the second turning angle θb (step Sb6).

Next, the lawn mowing running change control unit 80 determines whether the next turning point Ps on the work path D (that is, vicinity of the intersection of the work path D and the boundary A) is a high slip point Pk and whether the frequency of passing the high slip point Pk included in the work path D is higher than the frequency of passing the low slip point Pt, based on the slip rate distribution data 70 (step Sb7).

When the next turning point Ps is a high slip point Pk, or when the frequency of passing the high slip point Pk is higher than the frequency of passing the low slip point Pt (step Sb7: YES), the lawn mowing running change control unit 80 changes the turning angle to an angle leading to a work path D in which the turning point Ps deviates from the high slip point Pk and the frequency of passing the high slip point Pk is not higher than the frequency of passing the low slip point Pt (for example, the work path D that passes the low slip point Pt) (step Sb8) .

The robot lawn mower 2 turns at this turning angle so that the robot lawn mower 2 shown by the arrow Xb in Figure 9 does not turn at the next high slip point Pk. Further, when the frequency of passes at the high slip points Pk is high, the robot lawn mower 2 runs to avoid the high slip point Pk or to pass the low slip point Pt.

The slip reduction control is repeatedly and continuously executed during the lawn mowing running control (Figure 7: Step Sa2). Then, when the lawn mowing work is finished and the robot lawn mower 2 runs for returning (step Sa4), the return running change control unit 82 executes slip reduction control to decrease the generation of slip during the return running.

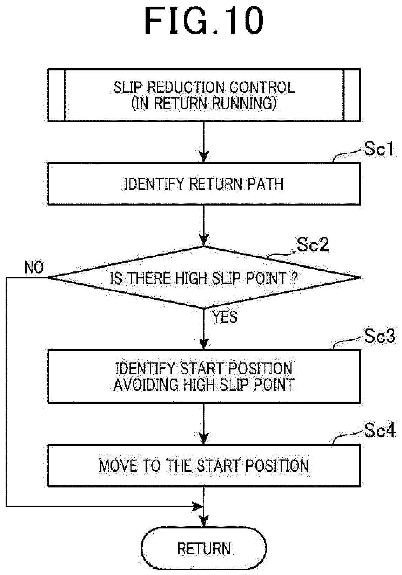

Figure 10 is a flowchart of slip reduction control during return running. Figure 11 is an explanatory diagram of an operation of slip reduction control during return running.

In this slip reduction control, the return running change control unit 82 first executes the above-mentioned start position change control.

That is, as shown in Figure 10, the return running change control unit 82 identifies the return path E that linearly connects the current position and the station 8 (step Sc1), and determines whether there is a high slip point Pk on the return path E based on the slip rate distribution data 70 (step Sc2). When there is a high slip point Pk (step Sc2: YES), the return running change control unit 82 identifies a position where the robot lawn mower 2 can go straight to return to the station 8 without passing the high slip point Pk (step Sc3), and moves the robot lawn mower 2 to the position (step Sc4). Accordingly, when there is a high slip point Pk on the return path E, the robot lawn mower 2 indicated by the arrow Ya in Figure 11 starts the return running after moving to the position Pf where the robot lawn mower 2 can return without passing the high slip point Pk. Therefore, the generation of the first-degree slip during the return running is reduced.

According to the above-described embodiment, the following effects can be obtained.

In this embodiment, the robot lawn mower 2 includes a running control unit 60 that controls autonomous running based on control information 74 that includes slip rate distribution data 70 in which the positional information P is associated with the slip rate $\lambda$.

This enables an autonomous running that takes a slip-prone point into consideration during autonomous running to prevent the generation of a slip with a certain degree (the first degree in this embodiment), reducing or preventing the lawn removal or the increase in the error of the positional information due to the slip.

In this embodiment, the robot lawn mower 2 is configured to autonomously run based on the control information 74 and the defined running path.

Accordingly, when the robot lawn mower 2 autonomously runs along the defined running path, the generation of slip is prevented.

In this embodiment, the robot lawn mower 2 is configured to autonomously run along the work path D and to decelerate according to the slip rate $\lambda$, during lawn mowing work.

As a result, the robot lawn mower 2 is decelerated according to the slip rate $\lambda$ during lawn mowing work, so that the robot lawn mower 2 can be surely decelerated at the high slip point Pk. This can reduce the slip at a time of passing the high slip point Pk to further reduce or prevent the lawn removal or the error in the positional information due to the slip.

In this embodiment, the robot lawn mower 2 is configured to decelerate to a speed lower than the slip generation running speed $V\lambda$ acquired by the slip generation speed acquisition unit 54A when entering the high slip point Pk.

This can surely make the degree of the slip at a time of passing the high slip point Pk smaller than the first degree to further reduce or prevent the lawn removal or the error in the positional information due to the slip.

In this embodiment, the robot lawn mower 2 is configured to decelerate at least to the slip reduction running speed Vs of the slip rate distribution data 70 stored in the storing unit 58 when entering the high slip point Pk.

This can surely decrease the slip generated when the robot lawn mower 2 passes the high slip point Pk, to the second degree or less, to surely reduce or prevent the lawn removal or the error in the positional information due to the slip.

In this embodiment, the robot lawn mower 2 is configured to autonomously run on the work path D where the turning point Ps deviates from the high slip point Pk, when a turning point Ps included in the defined work path D is a high slip point Pk.

This can reduce the slip at a time of turning, because the robot lawn mower 2 does not turn at the high slip point Pk, to reduce or prevent the lawn removal or the error in the positional information due to the slip at the turning point Ps.

In this embodiment, the robot lawn mower 2 is configured to autonomously run so that the frequency of passing the low slip point Pt is higher than the frequency of passing the high slip point Pk during the lawn mowing work.

This can reduce the frequency of running at the high slip point Pk to reduce the risk of generation of the first-degree slip, further reducing or preventing the lawn removal or the error in the positional information due to the slip.

In this embodiment, the robot lawn mower 2 is configured to change the return path E not to include the high slip point Pk and return, when the high slip point Pk is included in the return path E for returning to the station 8 after finishing the lawn mowing work.

As a result, the robot lawn mower 2 runs to return along the return path E that does not pass the high slip point Pk, and thus this can reduce the generation of slip in the situation where the detection accuracy of positional information is required, such as return running to the station 8, to improve the accuracy of returning to the station 8.

Note that each of the above-described embodiments merely exemplifies one aspect of the present invention, and can be optionally modified and applied without departing from the scope of the present claims.

In the above-described embodiments, cases are exemplified where the work path D is defined based on the running pattern at the time of lawn mowing work and the turning angle at the boundary A, but the way of defining the work path D is not limited to this. For example, data (for example, a set of positional information) that specifies the trajectory of the work path D from the start to the end of the lawn mowing work at one time may be set in advance.

Further, the return path E is set to a path that linearly connects the end point of the lawn mowing work and the station 8, but the return path E is not limited to this and may include a curve or a turning point.

In addition, for example, the robot lawn mower 2 may generate slip rate distribution data 70 while the robot lawn mower 2 is making a test run in the lawn mowing area 4 prior to the lawn mowing work.

Further, for example, the case where the lawn mowing area 4 is demarcated by the area wire 6 has been exemplified, but the way of demarcating the lawn mowing area 4 is not limited to this.

For example, the area detection sensor unit 28A of the robot lawn mower 2 may be configured to acquire positional information of the boundary A (relative positional information with respect to the station 8 or absolute positional information obtained from GPS or the like), and the robot lawn mower 2 may determine whether it is located at the boundary A based on the detection signal of the odometry detection sensor unit 28B. In this case, the area detection sensor unit 28A may acquire the positional information of the boundary A from an external computer, or may acquire it from data stored in advance in the memory device 42 or the storage device 44.

Further, for example, the configuration may be such that markers that can be detected by a camera, a sensor, or the like are provided at appropriate intervals along the boundary A of the lawn mowing area 4 instead of the area wire 6, and the area detection sensor unit 28A of the robot lawn mower 2 detects these markers using a camera or a sensor to detect the boundary A obtained by connecting respective markers.

Further, for example, the robot lawn mower 2 identifies the slip reduction running speed Vs with the running speed V at which the slip rate $\lambda$ becomes equal to or less than the second predetermined value $\lambda$th2 when the vehicle passes the high slip point Pk, however, the slip reduction running speed Vs may be identified as follows. That is, the robot lawn mower 2 may identify in advance the relationship ($\lambda$-V dependency) between the slip rate $\lambda$ and the running speed V when passing the high slip point Pk to calculate the slip reduction running speed Vs based on the relationship.

In addition, for example, the robot lawn mower 2 executes control to lower the running speed V below the slip generation running speed Vλ when passing the high slip point Pk during the lawn mowing running. However, the way of preventing slip generation is not limited to this, and the robot lawn mower 2 may avoid the high slip point Pk to autonomously run, in the same way as the return running. The operation during the lawn mowing running is realized, for example, in a way where the frequency of passing the high slip point Pk is set to "zero" in the above-mentioned passing point change control so that the path avoiding (not passing) the high slip point Pk is set for the work path D.

The functional blocks shown in Figure 3 are schematic diagrams in which the functional configuration of the control unit 30 is classified and shown according to main processing contents in order to facilitate understanding of the present invention, and the functional configuration of the control unit 30 can also be classified into more components according to the processing content. Also, one component can be classified to execute more processes. Further, the processes of respective components may be executed by one piece of hardware or a plurality of pieces of hardware. Further, the processes of respective components may be realized by one program or a plurality of programs.

Furthermore, an external computer (personal computer, smartphone, server computer, or the like) that communicates with the robot lawn mower 2 may include a part of the functional configuration of the control unit 30 shown in Figure 3 (for example, the slip rate distribution generation unit 55 and the like). In this case, the control unit 30 and the computer configure a control system that controls the autonomous running of the robot lawn mower 2.

The present invention can be applied not only to the robot lawn mower 2 that performs lawn mowing work while autonomously running, but also to any autonomous running working machine that performs any work while autonomously running.

Reference Signs List

1 unmanned lawn mowing system
2 robot lawn mower (autonomous running working machine)
4 lawn mowing area
8 station (predetermined position)
20 lawn mowing mechanism
28 sensor unit
28A area detection sensor unit
28B odometry detection sensor unit
28C slip rate detection sensor unit
28D speed detection sensor unit
30 control unit
50 positional information acquisition unit
52 slip rate acquisition unit
54 speed information acquisition unit
54A slip generation speed acquisition unit
55 slip rate distribution generation unit
56 running path setting unit
58 storing unit
60 running control unit
70 slip rate distribution data
71 running path data
74 control information
80 lawn mowing running change control unit
82 return running change control unit
A boundary
D work path
E return path
N number of passes
P positional information
Pk high slip point
Ps turning point
Pt low slip point
V running speed
Vs slip reduction running speed
Vλ slip generation running speed

θa first turning angle
θb second turning angle
λ slip rate
λth1 first predetermined value
λth2 second predetermined value

**Claims**

1. An autonomous running working machine (2) that is configured to execute a predetermined work while autonomously running, the autonomous running working machine comprising:

   a positional information acquisition unit (50) that is configured to acquire positional information;
   a slip rate acquisition unit (52) that is configured to acquire a slip rate indicating a degree of a slip;
   a storing unit (58) that is configured to store control information, the positional information acquired by the positional information acquisition unit being associated with the slip rate acquired by the slip rate acquisition unit in the control information,
   a running path setting unit (56) that is configured to set information defining a running path, and
   a running control unit (60) that is configured to control the autonomous running working machine (2) to run autonomously based on the control information stored in the storing unit (58) and the running path defined by the information set by the running path setting unit (56),
   wherein

   the running path includes a work path at a time of performing the predetermined work, and
   the running control unit (60) is configured to execute deceleration according to the slip rate while executing the autonomous running working machine to run autonomously along the work path,
   the autonomous running working machine further comprising:

   a slip generation speed acquisition unit (54A) that is configured to acquire a slip generation running speed (Vλ) when a slip rate indicating a first-degree slip is acquired wherein the running control unit (60) is configured to execute deceleration to a speed lower than the slip generation running speed (Vλ) in a case of entering a point (pk) with the slip rate indicating the first-degree slip, **characterized in that** when the autonomous running working machine (2) passes the point (pk) with the slip rate (λ) indicating the first-degree slip during lawn mowing work, the running control unit (60) is configured to reduce the running speed (V) to a speed lower than the slip generation running speed (Vλ) to prevent generation of the first-degree slip, and if the slip rate (λ) is equal to or less than a second predetermined value (λth2) when the autonomous running working machine (2) passes the point (pk) with the slip rate indicating the first-degree slip with the running speed (V) reduced, the running speed (V) is recorded in the storing unit (58) as the slip reduction running speed (Vs), and
   in a case of entering the point (pk) with the slip rate indicating the first-degree slip, the running control unit (60) is configured to execute deceleration at least to the slip reduction running speed (Vs) recorded in the storing unit (58).

2. The autonomous running working machine according to claim 1, wherein
   in a case where a turning point included in a work path defined by information set by the running path setting unit (56) is at the point with the slip rate indicating the first-degree slip, the running control unit (60) is configured to execute autonomous running on a work path where the turning point is deviated from the position.

3. The autonomous running working machine according to claim 1 or 2, wherein
   the running control unit is configured to execute the autonomous running such that a frequency of passing a point with a slip rate indicating generation of slip equal to or smaller than a second degree is higher than a frequency of passing the point with the slip rate indicating the first-degree slip.

4. The autonomous running working machine according to claim 1,

   wherein the running path includes a work path at a time of performing the predetermined work, and
   in a case where a work path defined by information set by the running path setting unit (56) includes the point with the slip rate indicating the first-degree slip, the running control unit (60) is configured to set a path avoiding the point as the work path.

5. The autonomous running working machine according to any one of claims 1 to 4, wherein
in a case where a return path for returning to a predetermined position includes the point with the slip rate indicating the first-degree slip, the running control unit (60) is configured to execute return by autonomous running on a path that does not include the point.

6. A control system configured to control an autonomous running working machine (2) according to any one of claims 1 to 5, wherein the control system comprises

the positional information acquisition unit (50) that is configured to acquire positional information of the autonomous running working machine;
the slip rate acquisition unit (52) that is configured to acquire a slip rate indicating a slip degree of the autonomous running working machine;
the storing unit (58) that is configured to store the control information; and
the running control unit (60) that is configured to control the autonomous running working machine based on the control information stored in the storing unit.


**Patentansprüche**

1. Autonom laufende Arbeitsmaschine (2), welche dazu eingerichtet ist, eine vorbestimmte Arbeit auszuführen, während sie autonom läuft, wobei die autonom laufende Arbeitsmaschine umfasst:

eine Positionsinformation-Aufnahmeeinheit (50), welche dazu eingerichtet ist, Positionsinformationen aufzunehmen;
eine Schlupfrate-Aufnahmeeinheit (52), welche dazu eingerichtet ist, eine Schlupfrate aufzunehmen, welche einen Grad eines Schlupfens anzeigt;
eine Speichereinheit (58), welche dazu eingerichtet ist, Steuerinformationen zu speichern,
wobei die von der Positionsinformation-Aufnahmeeinheit aufgenommenen Positionsinformationen der von der Schlupfrate-Aufnahmeeinheit aufgenommenen Schlupfrate in den Steuerinformationen zugeordnet sind,
eine Laufpfad-Setzeinheit (56), welche dazu eingerichtet ist, Informationen zu setzen, welche einen Laufpfad definieren, und
eine Lauf-Steuereinheit (60), welche dazu eingerichtet ist, die autonom laufende Arbeitsmaschine (2) dazu zu steuern, auf Grundlage der in der Speichereinheit (58) gespeicherten Steuerinformationen und des Laufpfads, welcher durch die Informationen definiert ist, welche von der Laufpfad-Setzeinheit (56) gesetzt werden, autonom zu laufen,
wobei

der Laufpfad einen Arbeitspfad zu einer Zeit eines Ausführens der vorbestimmten Arbeit umfasst, und
die Lauf-Steuereinheit (60) dazu eingerichtet ist, eine Verzögerung gemäß der Schlupfrate durchzuführen, während die autonom laufende Arbeitsmaschine dazu betrieben wird, autonom entlang des Arbeitspfads zu laufen,
wobei die autonom laufende Arbeitsmaschine ferner umfasst:

eine Schlupf-Erzeugungsgeschwindigkeit-Aufnahmeeinheit (54A), welche dazu eingerichtet ist, eine Schlupferzeugung-Laufgeschwindigkeit (VA) aufzunehmen, wenn eine Schlupfrate, welche ein Schlupfen ersten Grades anzeigt, aufgenommen wird,
wobei die Lauf-Steuereinheit (60) dazu eingerichtet ist, eine Verzögerung auf eine Geschwindigkeit auszuführen, welche geringer als die Schlupferzeugung-Laufgeschwindigkeit (VA) ist, in einem Fall eines Betretens eines Punkts (pk) mit der Schlupfrate, welche das Schlupfen ersten Grades anzeigt, **dadurch gekennzeichnet, dass**
wenn die autonom laufende Arbeitsmaschine (2) den Punkt (pk) mit der Schlupfrate ($\lambda$) passiert, welche das Schlupfen ersten Grades während einer Rasenmäh-Arbeit anzeigt, die Lauf-Steuereinheit (60) dazu eingerichtet ist, die Laufgeschwindigkeit (V) auf eine Geschwindigkeit zu reduzieren, welche geringer als die Schlupferzeugung-Laufgeschwindigkeit ($V\lambda$) ist, um ein Erzeugen des Schlupfens ersten Grades zu verhindern, und wenn die Schlupfrate ($\lambda$) gleich oder kleiner als ein zweiter vorbestimmter Wert ($\lambda th2$) ist, wenn die autonom laufende Arbeitsmaschine (2) den Punkt (pk) mit der Schlupfrate passiert, welche das Schlupfen ersten Grades anzeigt, während die Laufgeschwindigkeit (V) reduziert ist, die Laufgeschwindigkeit (V) in der Speichereinheit (58) als die Schlupfreduktion-Laufgeschwindigkeit (Vs) aufgenommen wird, und

in einem Fall eines Eintretens in den Punkt (pk) mit der Schlupfrate, welche das Schlupfen ersten Grades anzeigt, die Lauf-Steuereinheit (60) dazu eingerichtet ist, eine Verzögerung wenigstens auf die Schlupfreduktion-Laufgeschwindigkeit (Vs) auszuführen, welche in der Speichereinheit (58) aufgenommen ist.

2. Autonom laufende Arbeitsmaschine nach Anspruch 1, wobei
in einem Fall, in welchem ein Wendepunkt, welcher in einem Arbeitspfad umfasst ist, welcher durch Informationen definiert ist, welche von der Laufpfad-Setzeinheit (56) gesetzt werden, an dem Punkt mit der Schlupfrate ist, welche das Schlupfen ersten Grades anzeigt, die Lauf-Steuereinheit (60) dazu eingerichtet ist, ein autonomes Laufen an einem Arbeitspfad auszuführen, an welchem der Wendepunkt von der Position abweicht.

3. Autonom laufende Arbeitsmaschine nach Anspruch 1 oder 2, wobei
die Lauf-Steuereinheit dazu eingerichtet ist, das autonome Laufen derart auszuführen, dass eine Frequenz eines Passierens eines Punkts mit einer Schlupfrate, welche ein Erzeugen eines Schlupfens gleich oder kleiner als ein zweiter Grad anzeigt, höher ist als eine Frequenz eines Passierens des Punkts mit der Schlupfrate, welche das Schlupfen ersten Grades anzeigt.

4. Autonom laufende Arbeitsmaschine nach Anspruch 1,

wobei der Laufpfad einen Arbeitspfad zu einer Zeit eines Durchführens der vorbestimmten Arbeit umfasst, und
in einem Fall, in welchem ein Arbeitspfad, welcher durch Informationen definiert ist, welche von der Laufpfad-Setzeinheit (56) gesetzt werden, den Punkt mit der Schlupfrate umfasst, welche das Schlupfen ersten Grades anzeigt, die Lauf-Steuereinheit (60) dazu eingerichtet ist, einen Pfad als den Arbeitspfad zu setzen, welcher den Punkt vermeidet.

5. Autonom laufende Arbeitsmaschine nach einem der Ansprüche 1 bis 4, wobei in einem Fall, in welchem ein Rückkehrpfad zum Zurückkehren zu einer vorbestimmten Position den Punkt mit der Schlupfrate umfasst, welche das Schlupfen ersten Grades anzeigt, die Lauf-Steuereinheit (60) dazu eingerichtet ist, ein Zurückkehren durch ein autonomes Laufen auf einem Pfad aufzuführen, welcher den Punkt nicht umfasst.

6. Steuersystem, welches dazu eingerichtet ist, eine autonom laufende Arbeitsmaschine (2) nach einem der Ansprüche 1 bis 5 zu steuern, wobei das Steuersystem umfasst:

die Positionsinformation-Aufnahmeeinheit (50), welche dazu eingerichtet ist, Positionsinformationen der autonom laufenden Arbeitsmaschine aufzunehmen;
die Schlupfrate-Aufnahmeeinheit (52), welche dazu eingerichtet ist, eine Schlupfrate aufzunehmen, welche einen Schlupfgrad der autonom laufenden Arbeitsmaschine anzeigt;
die Speichereinheit (58), welche dazu eingerichtet ist, die Steuerinformationen zu speichern; und
die Lauf-Steuereinheit (60), welche dazu eingerichtet ist, die autonom laufende Arbeitsmaschine auf Grundlage der in der Speichereinheit gespeicherten Steuerinformationen zu steuern.

**Revendications**

1. Machine de travail à déplacement autonome (2) qui est configurée pour exécuter un travail prédéterminé tout en se déplaçant de manière autonome, la machine de travail à déplacement autonome comprenant :

une unité d'acquisition d'informations de position (50) qui est configurée pour acquérir des informations de position ;
une unité d'acquisition de taux de glissement (52) qui est configurée pour acquérir un taux de glissement indiquant un degré d'un glissement ;
une unité de stockage (58) qui est configurée pour stocker des informations de commande, les informations de position acquises par l'unité d'acquisition d'informations de position étant associées au taux de glissement acquis par l'unité d'acquisition de taux de glissement dans les informations de commande,
une unité de réglage de trajet de déplacement (56) qui est configurée pour régler des informations définissant un trajet de déplacement, et

une unité de commande de déplacement (60) qui est configurée pour commander à la machine de travail à déplacement autonome (2) de se déplacer de manière autonome sur la base des informations de commande stockées dans l'unité de stockage (58) et du trajet de déplacement défini par les informations réglées par l'unité de réglage de trajet de déplacement (56),

dans laquelle

le trajet de déplacement comporte un trajet de travail à un temps de réalisation du travail prédéterminé, et l'unité de commande de déplacement (60) est configurée pour exécuter une décélération en fonction du taux de glissement tout en commandant à la machine de travail à déplacement autonome de se déplacer de manière autonome le long du trajet de travail,

la machine de travail à fonctionnement autonome comprenant en outre :

une unité d'acquisition de vitesse de génération de glissement (54A) qui est configurée pour acquérir une vitesse de déplacement de génération de glissement (Vλ) lorsqu'un taux de glissement indiquant un glissement de premier degré est acquis,

dans laquelle l'unité de commande de déplacement (60) est configurée pour exécuter une décélération à une vitesse inférieure à la vitesse de déplacement de génération de glissement (Vλ) dans un cas d'entrée d'un point (pk) avec le taux de glissement indiquant le glissement de premier degré, **caractérisée en ce que**

lorsque la machine de travail à déplacement autonome (2) passe le point (pk) avec le taux de glissement (λ) indiquant le glissement de premier degré au cours d'un travail de tonte de gazon, l'unité de commande de déplacement (60) est configurée pour réduire la vitesse de déplacement (V) à une vitesse inférieure à la vitesse de déplacement de génération de glissement (Vλ) pour empêcher toute génération du glissement de premier degré, et, si le taux de glissement (λ) est inférieur ou égal à une deuxième valeur prédéterminée (λth2) lorsque la machine de travail à fonctionnement autonome (2) passe le point (pk) avec le taux de glissement indiquant le glissement de premier degré avec la vitesse de déplacement (V) réduite, la vitesse de déplacement (V) est enregistrée dans l'unité de stockage (58) en tant que la vitesse de déplacement de réduction de glissement (Vs), et

dans un cas d'entrée du point (pk) avec le taux de glissement indiquant le glissement de premier degré, l'unité de commande de déplacement (60) est configurée pour exécuter une décélération au moins à la vitesse de déplacement de réduction de glissement (Vs) enregistrée dans l'unité de stockage (58).

2. Machine de travail à déplacement autonome selon la revendication 1, dans laquelle

dans un cas où un point de braquage compris dans un trajet de travail défini par des informations réglées par l'unité de réglage de trajet de déplacement (56) est au point avec le taux de glissement indiquant le glissement de premier degré, l'unité de commande de déplacement (60) est configurée pour exécuter un déplacement autonome sur un trajet de travail où le point de braquage est dévié de la position.

3. Machine de travail à déplacement autonome selon la revendication 1 ou 2, dans laquelle

l'unité de commande de déplacement est configurée pour exécuter le déplacement autonome de sorte qu'une fréquence de passage d'un point avec un taux de glissement indiquant une génération d'un glissement inférieur ou égal à un deuxième degré soit supérieure à une fréquence de passage du point avec le taux de glissement indiquant le glissement de premier degré.

4. Machine de travail à déplacement autonome selon la revendication 1,

dans laquelle le trajet de déplacement comporte un trajet de travail à un temps de réalisation du travail prédéterminé, et

dans un cas où un trajet de travail défini par des informations réglées par l'unité de réglage de trajet de déplacement (56) comporte le point avec le taux de glissement indiquant le glissement de premier degré, l'unité de commande de déplacement (60) est configurée pour régler un trajet évitant le point en tant que le trajet de travail.

5. Machine de travail à déplacement autonome selon l'une quelconque des revendications 1 à 4, dans laquelle

dans un cas où un trajet de retour pour retourner à une position prédéterminée comporte le point avec le taux de glissement indiquant le glissement de premier degré, l'unité de commande de déplacement (60) est configurée pour exécuter un retour par un déplacement autonome sur un trajet qui ne comporte pas le point.

**6.** Système de commande configuré pour commander une machine de travail à déplacement autonome (2) selon l'une quelconque des revendications 1 à 5, dans lequel le système de commande comprend

l'unité d'acquisition d'informations de position (50) qui est configurée pour acquérir des informations de position de la machine de travail à déplacement autonome ;
l'unité d'acquisition de taux de glissement (52) qui est configurée pour acquérir un taux de glissement indiquant un degré de glissement de la machine de travail à déplacement autonome ;
l'unité de stockage (58) qui est configurée pour stocker les informations de commande ; et
l'unité de commande de déplacement (60) qui est configurée pour commander la machine de travail à déplacement autonome sur la base des informations de commande stockées dans l'unité de stockage.

FIG.1

# FIG.2

EP 3 779 629 B1

# FIG.3

# FIG.4

70

| POSITIONAL INFORMATION P | SLIP RATE $\lambda$ | SLIP GENERATION RUNNING SPEED $V\lambda$ | SLIP REDUCTION RUNNING SPEED Vs | NUMBER OF PASSES N | |
|---|---|---|---|---|---|
| | | | | HIGH SLIP POINT | LOW SLIP POINT |
| $P_1$ | $\lambda_1$ | — | — | — | — |
| $P_2$ | $\lambda_2$ | $V\lambda_2$ | $V_{S2}$ | $N_{K2}$ | — |
| $P_3$ | $\lambda_3$ | — | — | — | $Nt_3$ |
| | | | | | |

$(P_K)$ → $P_2$

$(Pt)$ → $P_3$

# FIG.5

# FIG.6

# FIG.7

```
                    ┌─────────┐
                    │  START  │
                    └─────────┘
                         │
    ┌────────────────────┼
    │                    ▼
    │              ╱╲ Sa1
    │            ╱    ╲
  NO│    ╱╲    IS      ╲
    │◄──╱  LAWN MOWING WORK ╲
    │   ╲    STARTED ?     ╱
    │     ╲             ╱
    │       ╲         ╱
    │          ▼ YES
    │          │
    │ ┌────────┼
    │ │        ▼           Sa2
    │ │ ┌───────────────────────────┐
    │ │ ║ LAWN MOWING RUNNING CONTROL ║
    │ │ └───────────────────────────┘
    │ │        │
    │ │        ▼
    │ │      ╱╲ Sa3
    │ │    ╱    ╲
  NO│ │  ╱   IS   ╲
    └─┼─◄ LAWN MOWING WORK ╲
      │  ╲  FINISHED ?   ╱
      │    ╲          ╱
      │      ▼ YES
      │      │
      │      ▼           Sa4
      │ ┌───────────────────────────┐
      │ ║ RETURN RUNNING CONTROL    ║
      │ └───────────────────────────┘
      │      │
      │      ▼
      │  ┌─────────┐
      │  │   END   │
      │  └─────────┘
```

# FIG.8

**SLIP REDUCTION CONTROL (IN LAWN MOWING RUNNING)**

Sb1 — IS ROBOT LAWN MOWER ENTERING A HIGH SLIP POINT ?
- NO
- YES

Sb2 — DECELERATION CONTROL

Sb3 — HAS ROBOT LAWN MOWER PASSED A HIGH SLIP POINT ?
- NO
- YES

Sb4 — RESTORE RUNNING SPEED

Sb5 — IS BOUNDARY DETECTED ?
- NO
- YES

Sb6 — IDENTIFY DEFINED RUNNING PATH

Sb7 — IS NEXT TURNING POINT HIGH SLIP POINT, OR IS FREQUENCY OF PASSING HIGH SLIP POINT TOO HIGH ?
- NO
- YES

Sb8 — CHANGE TURNING ANGLE

# FIG.9

EP 3 779 629 B1

# FIG.10

```
┌─────────────────────────────────────┐
│   SLIP REDUCTION CONTROL            │
│   (IN RETURN RUNNING)               │
└─────────────────────────────────────┘
                 │
                 ▼                    Sc1
┌─────────────────────────────────────┐
│        IDENTIFY RETURN PATH         │
└─────────────────────────────────────┘
                 │
                 ▼                    Sc2
       ◇ IS THERE HIGH SLIP POINT ? ◇
NO ──────┘                   │
                            YES
                             │
                             ▼        Sc3
┌─────────────────────────────────────┐
│       IDENTIFY START POSITION       │
│       AVOIDING HIGH SLIP POINT      │
└─────────────────────────────────────┘
                 │
                 ▼                    Sc4
┌─────────────────────────────────────┐
│      MOVE TO THE START POSITION     │
└─────────────────────────────────────┘
                 │
                 ▼
            ( RETURN )
```

# FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5529947 B
- US 20160302354
- US 20140032033
- CN 107348910 A
- CN 107443430 A
- US 2009055020 A1
- JP 2007323119 A